# EUROPÄISCHE PATENTSCHRIFT

(11) **EP 0 772 424 B1**
(45) Veröffentlichungstag und Bekanntmachung des Hinweises auf die Patenterteilung: **12.04.2000**
(21) Anmeldenummer: 95928487.8
(22) Anmeldetag: 28.07.1995
(51) Int. Cl.: A61C 13/09, A61C 13/08

(54) **KÜNSTLICHER ZAHN**
ARTIFICIAL TOOTH
DENT ARTIFICIELLE

(30) Priorität: 29.07.1994 DE 4426994
(43) Veröffentlichungstag der Anmeldung: 14.05.1997
(73) Patentinhaber: First Patent AG, 8008 Zürich (CH)
(72) Erfinder: KURA, Günter, D-50127 Bergheim (DE); BRAUN, Frank, Dietrich, D-40668 Meerbusch (DE); DAUG, Harry, D-42113 Wuppertal (DE)
(74) Vertreter: Zapf, Christoph, Dipl.-Ing.
(86) Internationale Anmeldenummer: EP9503014
(87) Internationale Veröffentlichungsnummer: WO9603935

(56) Entgegenhaltungen:
- DE-A- 1 903 935
- DE-A- 3 644 498
- DE-A- 3 827 657
- US-A- 2 514 076
- US-A- 3 488 846

## Beschreibung

Die vorliegende Erfindung betrifft einen künstlichen, durch Spritzgießen hergestellten Zahn aus Kunststoffmaterial oder einer spritzgießfähigen Keramikmasse, bestehend aus einem Vollkern und aus mindestens einer Außenschicht zur Verwendung als Zahnersatz für einen natürlichen Zahn im menschlichen Körper.

Aus der US-A-25 14 076 ist bereits ein künstlicher, durch Spritzgießen hergestellter Zahn aus Kunststoffmaterial bekannt, mit dem auf einen Vollkern mindestens eine Außenschicht aufgebracht ist. Sofern in dieser Druckschrift offenbart ist, daß dort ein äußerer Film aufgebracht wird, so handelt es sich hierbei um eine äußere abschließende Verschleißschicht, die nichts mit dem Aufbau des Zahns zu tun hat.

Weiterhin ist aus der DE-A-36 44 498 ein künstlicher Zahn bekannt, bei dem von dem Dentin und dem Zahnbein ausgehend, nach außen hin einerseits eine den Zahnhals bildende Schicht und andererseits eine die transparente Schneide bildende Schicht aufgebaut werden. Hierbei sollen dünne Kleberschichten zwischen den einzelnen Schichten aufgebracht werden können, um eine einwandfreie Verbindung zwischen den Zahnschichten zu erreichen, die das Dentin nur teilweise umgeben.

Der vorliegenden Erfindung liegt die Aufgabe zugrunde, einen aus mehreren Schichten aufgebauten künstlichen Zahn zu schaffen, dessen Herstellung weitgehend automatisiert werden kann, und wobei eine reproduzierbare Anordnung der Schichten gewährleistet ist und insbesondere auch eine Gratbildung minimiert wird, so daß sich niedrige Herstellungskosten ergeben.

Die vorstehende Aufgabe wird erfindungsgemäß dadurch gelöst, daß die erste Außenschicht den inneren Vollkern von seiner Basis aus allseitig unmittelbar umhüllt und etwaige weitere Außenschichten die inneren Außenschichten allseitig umhüllen, wobei der Vollkern, die erste Außenschicht und die etwaigen weiteren Außenschichten aus einer thermoplastischen Spritzgießmasse hergestellt sind.

Alternativ wird erfindungsgemäß ebenfalls vorgesehen, daß die erste Außenschicht den inneren Vollkern von seiner Basis aus allseitig unmittelbar umhüllt, und etwaige weitere Außenschichten die inneren Außenschichten allseitig umhüllen, wobei der Vollkern, die erste Außenschicht und die etwaigen weiteren Außenschichten aus einer spritzgießfähigen Keramikmasse aus einem Keramikpulver mit einem Binder aus Kunststoff hergestellt sind.

Bei der Verwendung eines Kunststoffmaterials als Herstellungsmaterial wird erfindungsgemäß ein transparenter, amorpher Kunststoff verwendet. Hierbei wird insbesondere als Kunststoffmaterial ein schlagzähmodifiziertes Polymethylmethacrylat (PMMA) verwendet. Weiterhin kann es erfindungsgemäß vorteilhaft sein, wenn ein Kunststoffmaterial aus einer Mischung von Kunststoffen mit demselben Brechungsindex verwendet wird.

Durch den Einsatz der Spritzgießtechnik wird eine wesentliche Kostenersparnis erreicht, da das Spritzgießen vollständig automatisch erfolgt und somit eine reproduzierbare Anordnung der Schichten gewährleistet werden kann. Hierbei kann es sich um ein Mehrkomponenten-Spritzgießverfahren handeln, wobei die Material-Komponenten innerhalb des Zahnkörpers Schichten bilden, so daß, indem die einzelnen Material-Komponenten unterschiedlich eingefärbt sind, das natürliche Zahnerscheinungsbild optimal angenähert werden kann.

Vorteilhafte Ausführungen der Erfindung sind in den Unteransprüchen enthalten.

Anhand der in den beiliegenden Zeichnungen dargestellten Ausführungsbeispiele wird die Erfindung näher erläutert. Es zeigen:
- Fig. 1: einen Schnitt in sagittaler Ebene durch einen erfindungsgemäßen, als Frontzahn ausgebildeten künstlichen Zahn und
- Fig. 2: einen Schnitt in frontaler Ebene durch den Zahn gemäß Fig. 1.
- Fig. 3 u. Fig. 4: perspektivische Ansichten eines erfindungsgemäßen Seitenzahns.
- Fig. 5: eine weitere Ausführungsform eines erfindungsgemäßen Zahns in der Ansicht gemäß Fig. 2.

In den Figuren sind die gleichen Merkmale des erfindungsgemäßen künstlichen Zahnes mit denselben Bezugsziffern gekennzeichnet.

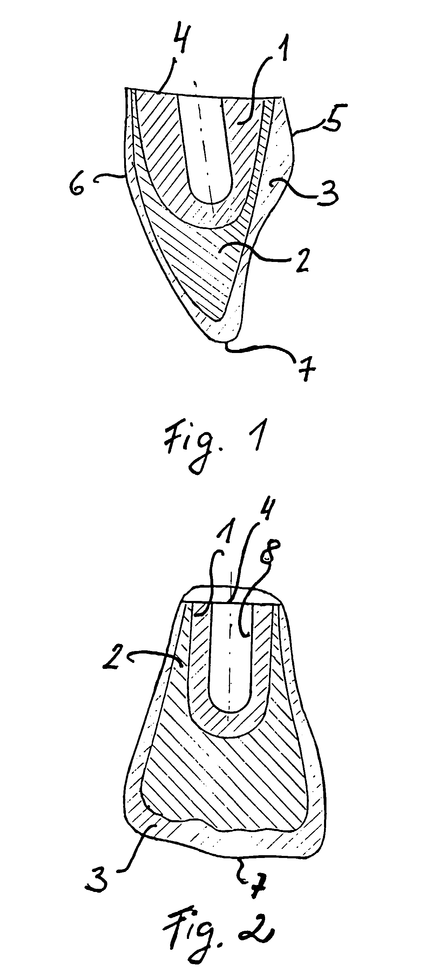

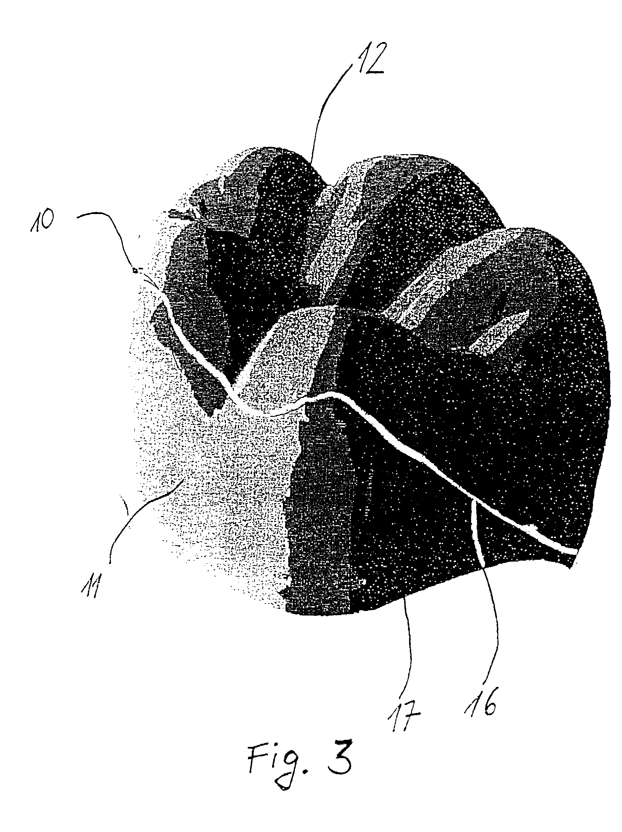

Wie sich aus Fig. 1 und 2 ergibt, besteht ein erfindungsgemäßer Zahn aus einem Zahnkörper mit einem Vollkern 1. Dieser Vollkern 1 bildet den Grundkörper des Zahnes, auf dem die weitere Außenschichten 2 und 3 den Vollkern 1 umhüllend aufgebaut sind. Hierbei bleibt die basale Seite 4 des Vollkerns 1, die die Basis bildet, frei, wohingegen die palatinale Seite 5, die labiale Seite 6 und die incisale Seite 7 des Zahnes von den Außenschichten 2, 3 gebildet wird. Der Vollkern 1 ist etwa kegelstumpfförmig ausgebildet, wobei die der basalen Seite 4 gegenüberliegende Seite abgerundet ist. Die den Vollkern 1 unmittelbar umgebende Außenschicht 2 ist im Bereich des Randes der basalen Seite 4, dem Zahnansatz, mit einer geringen Dicke ausgebildet, die beispielsweise 0,2 mm beträgt. Die Außenschicht 2 nimmt jedoch in Richtung auf die incisale Seite 7 des Zahnes in ihrer Dicke erheblich zu und ist dabei derart geformt, daß sie zusammen mit dem Vollkern 1 praktisch die Grundstruktur des Zahnes bildet. Die äußere Außenschicht 3 besitzt umfangsgemäß in etwa die gleiche Dicke, wobei, wie dargestellt, die palatinale Seite 5 durch die Außenschicht 3 zusätzlich modeliert ist, wohingegen im Bereich der labialen Seite 6 die Außenschicht 3 etwa eine konstante Dicke aufweist, wie auch in den übrigen Bereichen, wie in Fig. 2 gezeigt. In der basalen Seite 4 des Vollkerns 1 ist in der Zahnachse ein Sackloch 8 ausgebildet, das in seiner Größe der jeweiligen Zahngröße angepaßt ist und dessen Lochdurchmesser ca. 2 bis 3 mm und dessen Tiefe ca. 4 bis 6 mm betragen kann. Das Sackloch 8 ist glattwandig ausgebildet, so daß keine scharfen Kanten vorhanden sind, und somit Spannungsrisse sich nicht ausbilden können. Dieses Sackloch 8 dient einerseits zur Halterung des Vollkerns 1 innerhalb einer Spritzform zur Durchführung des Spritzprozesses und andererseits zur Befestigung des fertigen Zahns auf einer Kunststoffbasis bei der Herstellung einer Zahnprothese. Als Herstellungsmaterial des erfindungsgemäßen Zahnes kann ein transparenter (amorpher) Kunststoff verwendet werden, der die Anforderungen nach DIN 13931 bzw. ISO 3336 erfüllt. Insbesondere kann ein transparenter Thermoplast eingesetzt werden. Geeignetes Kunststoffmaterial ist Polymethylmethacrylat (PMMA) und/oder seine Copolymere. Vorteilhafterweise wird ein schlagzähmodifiziertes PMMA verwendet. Weiterhin kann es erfindungsgemäß zweckmäßig sein, wenn Mischungen aus Kunststoffen mit gleichem Brechungsindex eingesetzt werden. Derartige Mischungen bestehen aus einem Standard-PMMA und schlagzähmodifiziertem PMMA, wobei ein Mischungsverhältnis von 30 % Standard PMMA und 70 % schlagzähmodifiziertes PMMA zweckmäßig ist. Es kann aber auch eine Mischung aus Polymethacrylmethylimid (PMMI) und einem Methylmethacrylat-Styrol-Copolymer eingesetzt werden, wobei es zweckmäßig ist, wenn 60 % PMMI und 40 % Methylmethacrylat-Styrol-Copolymer vorhanden sind. Ebenfalls kann erfindungsgemäß eine Mischung aus einem Copolymer aus Methylmethacrylat und Styrol mit einem Methylmethacrylat-Anteil von mehr als 60 % Verwendung finden.

Weiterhin kann es erfindungsgemäß von Vorteil sein, wenn als Herstellungsmaterial eine spritzgießfähige Keramikmasse aus einem Keramikpulver wie z.B. Al₂O₃ oder ZrO₂ mit einem als Binder benutzten Kunststoffzusatz eingesetzt wird.

Diese spritzgießfähige Keramikmasse wird in einer Spritzgießmaschine verarbeitet und der gespritzte Zahn als sogenannter Grünling dem Spritzgießwerkzeug entnommen. Dieser Grünling wird in einem Entbinderofen entbindert, d.h. der als Binder benutzte Kunststoffzusatz wird ausgetrieben, so daß der Binder möglichst vollständig aus dem Formteil entfernt wird, wobei möglichst eine Geometrieveränderung vermieden werden soll. Anschließend erfolgt ein Sintern in einem Sinterofen und eventuell noch eine erforderliche Nachbearbeitung.

Erfindungsgemäß besitzen der Vollkern 1 und die Außenschichten unterschiedliche Einfärbungen. So ist vorteilhafterweise der Vollkern 1 dunkel eingefärbt, die durchscheinende Außenschicht 2 besitzt eine etwas hellere Einfärbung, und die Außenschicht 3 ist hell durchscheinend. Weiterhin kann es zweckmäßig sein, noch weitere umhüllende Außenschichten vorzusehen. Durch die umhüllende Ausbildung der Schichten 2, 3 kann ein den natürlichen Zähnen optimal angepaßtes farbliches Erscheinungsbild erreicht werden. Hierbei werden natürliche Farbübergänge ohne Trennlinien ermöglicht. Durch die Ausbildung der Sacklöcher 8 in den erfindungsgemäßen Zähnen erübrigt sich ein nachträgliches Bohren von Verankerungslöchern, so daß die Gefahr der Erzeugung rißauslösender scharfer Kanten ausgeschlossen wird.

Zur Herstellung des erfindungsgemäßen Zahns wird insbesondere ein Mehrkomponenten-Spritzgießverfahren eingesetzt. Sofern ein dreischichtiger Zahn hergestellt wird, d.h. ein Zahn gem. den Fig. 1 und 2, wird im ersten Schritt das Kernmaterial des Vollkerns 1 in eine erste Werkzeugkavität gespritzt. Danach öffnet sich das Werkzeug, und die Werkzeughälfte mit dem gespritzten Vollkern 1 dreht sich um 120°. Hierbei besitzt ein verwendetes Kunststoffmaterial eine plastische, aber bereits formstabile Konsistenz und ist etwa auf seine Glastemperatur abgekühlt. Beim Schließen des Werkzeuges fährt der Vollkern 1 in eine zweite, etwas größere Kavität zum Spritzen der Außenschicht 2. Hierbei ist an der Grenzfläche zwischen dem Kern und der Außenschicht 2 eine Temperatur vorhanden, die eine Verschmelzung der beiden Schichten ermöglicht. Nach dem Umspritzen mit der Außenschicht 2 öffnet sich das Werkzeug, und die bewegliche Werkzeughälfte dreht sich um weitere 120°, so daß der umspritzte Vollkern 1 beim Schließen des Werkzeuges in eine dritte Kavität gelangt. In dieser Kavität, die der Geometrie des fertigen Zahns entspricht, wird die Außenschicht 3 aufgespritzt. Nach genügender Abkühlung öffnet sich das Werkzeug, und der fertige Zahn wird ausgeworfen. Die Temperaturverhältnisse beim Aufspritzen der Außenschicht 3 auf die Außenschicht 2 sind die gleichen wie beim Aufspritzen der Kunststoffschicht 2 auf den Vollkern 1. Nachdem der fertige Zahn ausgeworfen ist, dreht sich die bewegliche Werkzeughälfte um weitere 120°, so daß sich das Werkzeug wieder in seiner Ausgangsposition befindet. Der gesamte Spritzzyklus läuft vollautomatisch ab, und die erzeugten Schichten des erfindungsgemäßen Zahnes sind verfahrensbedingt bei jedem Zyklus gleich. Die Schichten 1, 2, 3 bestehen vorzugsweise aus dem gleichen Kunststoffmaterial, wobei jedoch diese Materialien vorteilhafterweise unterschiedlich eingefärbt sind. Das Einspritzen der jeweiligen Folgeschicht erfolgt so schnell, daß die an der Berührungsfläche zur Unterschicht entstehende Kontakttemperatur höher ist als die Erweichungstemperatur des jeweiligen Kunststoffes.

Ein erfindungsgemäß verwendetes Spritzgießwerkzeug kann so aufgebaut sein, daß gleichzeitig mehrere Zähne, z.B. eine Garnitur, spritzgegossen wird.

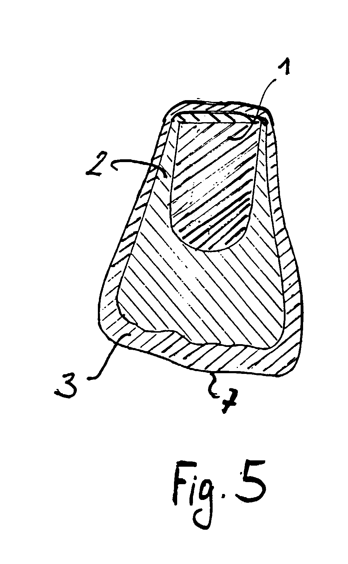

Als alternatives Herstellungsverfahren des erfindungsgemäßen Zahns kann auch ein Mehrkomponenten-Spritzgießverfahren verwendet werden, bei dem allein durch die Dosierung der unterschiedlich gefärbten Materialien, insbesondere Kunststoff-Komponenten, ein entsprechend geschichteter Aufbau des Zahnkörpers erreicht wird, so daß im Werkzeug nur die Kavität mit der Zahngeometrie benötigt wird. Hierbei wird z.B. aus drei Plastifiziereinheiten einer Spritzgießmaschine mittels eines Kolbens oder einer Schnecke nacheinander die Komponente für die äußere Außenschicht 3 und die Komponente für die mittlere Außenschicht 2 in einen Angußkanal der Spritzgießform dosiert und dann nach Umschalten auf die dritte Plastifiziereinheit mit der nachfolgenden Komponente für den Vollkern 1 so in das Werkzeug eingespritzt, daß die Formfüllung insbesondere im Quellfluß erfolgt. Beim Vorschieben der Schmelzefront bleibt bei diesem Verfahren ein Teil des Frontmaterials an der kalten Formwand haften und bildet so die äußere Schicht 3. Die Dosierung ist dabei so zu wählen, daß sich bis zur vollständigen Formfüllung Material dieser Komponente in der Fließfront befindet. Durch ein senkrecht zur Formwand entstehendes Temperaturgefälle verhält sich die nachfolgende Komponente ähnlich der ersten, bildet die mittlere Außenschicht 2 und schließt das Kernmaterial 1 ein. Beim Anspritzen von der basalen Seite erhält man eine Schichtbildung ähnlich der Darstellung in Fig. 1 und 2, wobei der Vollkern 1 jedoch auch an der basalen Seite von den Außenschichten 2 und 3 umschlossen wird, siehe Fig. 5. Die Dicke der Außenschichten 2 und 3 ist verfahrensbedingt in Fließrichtung, d.h. beim Schneidezahn von der basalen Seite hin zur Schneide, leicht zunehmend, was dem Erscheinungsbild des Zahnes entgegenkommt. Die Dicke der Außenschichten 2 und 3 läßt sich beeinflussen durch die Wahl der Verfahrensparameter, wie z.B. Dosiermenge, Massetemperatur, Werkzeugtemperatur und Einspritzgeschwindigkeit. Die spritzgießfähige Keramikmasse verhält sich bei der Verarbeitung auf der Spritzgießmaschine entsprechend einem gefüllten Kunststoff, so daß die beschriebenen vorteilhaften Verfahren auch bei der Verwendung der spritzgießfähigen Keramikmasse Anwendung finden.

Ein erfindungsgemäß hergestellter Seitenzahn besitzt grundsätzlich dieselbe Schichtfolge wie der Frontzahn gemäß Fig. 1 und 2, wobei bedingt durch die Form des Seitenzahnes jedoch abweichende Grundstrukturen des Vollkerns 1 und der Außenschichten 2, 3 vorhanden sind. Hierbei tritt anstelle der incisalen Seite 7 die okklusale Seite 7 und anstelle der labialen Seite 6 die bukkale Seite 6.

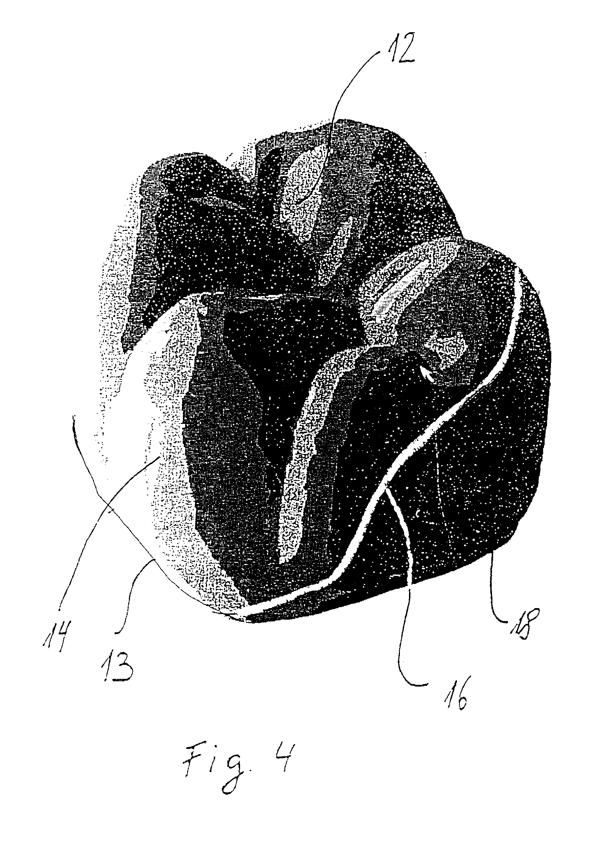

In den Figuren 3 und 4 ist dargestellt, wie bei einem erfindungsgemäßen Seitenzahn der Verlauf der Trenngrate ist, die bei der Entformung des fertigen, gespritzten Zahnkörpers aus der Spritzgußform aufgrund der Anordnung der Trennebenen der Spritzgußform entstehen. Hierbei ist erfindungsgemäß vorgesehen, daß die Trenngrate derart am fertigen Zahnkörper verlaufen, daß sie im menschlichen Mund im eingesetzten Zustand des Zahnkörpers nicht sichtbar sind. Bei dem in Figur 3 dargestellten Zahnkörper eines erfindungsgemäßen Seitenzahns in lingualer Ansicht ist zu erkennen, daß ein lingualer Trenngrat 10 im Übergang zwischen der lingualen Körperseite 11 und der okklusalen Körperfläche 12 verläuft. In Fig. 4, die eine bukkale Seitenansicht eines erfindungsgemäßen Seitenzahns zeigt, ist zu erkennen, daß ein bukkaler Trenngrat 13 im Übergang zwischen der bukkalen Körperseite 14 und der Basis 15 des Zahnkörpers vorgesehen ist. Weiterhin ist aus den Figuren 3 und 4 ersichtlich, daß die Trenngrate 16 an den beiden Seitenflächen 17, 18 des Zahnkörpers jeweils etwa diagonal die Enden des lingualen Trenngrates 10 und des bukkalen Trenngrates 13 verbindend verlaufen.

Bei einem als Frontzahn ausgebildeten erfindungsgemäßen Zahnkörper sind die Trenngrate mittig an den beiden Seitenflächen des Zahnkörpers derart angeordnet, daß sie von der Basis des Zahnkörpers zur Zahnschneide hin verlaufen.

## Patentansprüche

1. Künstlicher, durch Spritzgießen hergestellter Zahn aus Kunststoffmaterial aus einem Vollkern (1) und aus mindestens einer Außenschicht (2) zur Verwendung als Zahnersatz für einen natürlichen Zahn im menschlichen Körper,
**dadurch gekennzeichnet,**
daß die erste Außenschicht (2) den inneren Vollkern (1) von seiner Basis (4) aus allseitig unmittelbar umhüllt und etwaige weitere Außenschichten die inneren Außenschichten allseitig umhüllen, wobei der Vollkern (1) die erste Außenschicht (2) und die etwaigen weiteren Außenschichten aus einer thermoplastischen Spritzgießmasse hergestellt sind.

2. Künstlicher, durch Spritzgießen hergestellter Zahn aus einem Vollkern (1) und mindestens einer Außenschicht (2) zur Verwendung als Zahnersatz für einen natürlichen Zahn im menschlichen Körper,
**dadurch gekennzeichnet,**
daß die erste Außenschicht (2) den inneren Vollkern (1) von seiner Basis (4) aus allseitig unmittelbar umhüllt und etwaige weitere Außenschichten die inneren Außenschichten allseitig umhüllen, wobei der Vollkern (1), die erste Außenschicht (2) und die etwaigen weiteren Außenschichten aus einer spritzgießfähigen Keramikmasse aus einem Keramikpulver mit einem Binder aus Kunststoff hergestellt sind.

3. Künstlicher Zahn nach Anspruch 1,
**dadurch gekennzeichnet,**
daß als Herstellungsmaterial ein Kunststoffmaterial aus einem transparenten (amorphen) Kunststoff verwendet wird.

4. Künstlicher Zahn nach Anspruch 1,
**dadurch gekennzeichnet,**
daß als Kunststoffmaterial ein schlagzähmodifiziertes Polymethylmethacrylat (PMMA) verwendet wird.

5. Künstlicher Zahn nach den Ansprüchen 1, 3 oder 4,
**dadurch gekennzeichnet,**
daß als Kunststoffmaterial eine Mischung aus Kunststoffen mit demselben Brechungsindex verwendet wird.

6. Künstlicher Zahn nach Anspruch 1,
**dadurch gekennzeichnet,**
daß als Kunststoffmaterial eine Mischung aus Copolymeren aus Methylmethacrylat (MMA) und Styrol mit einem MMA-Anteil von mehr als 60 % verwendet wird.

7. Künstlicher Zahn nach einem der Ansprüche 1 bis 6,
**dadurch gekennzeichnet,**
daß bei der Ausbildung als Frontzahn der Vollkern (1) an der palatinalen (5), der labialen (6) und der incisalen (7) Seite und in deren Verbindungsbereichen von den Außenschichten (2,3) umhüllt ist.

8. Künstlicher Zahn nach einem der Ansprüche 1 bis 6,
**dadurch gekennzeichnet,**
daß bei der Ausbildung als Seitenzahn der Vollkern (1) an der palatinalen Seite (5), der bukkalen (6) und der okklusalen (7) Seite und in deren Verbindungsbereichen von den Außenschichten (3,3) umhüllt sind.

9. Künstlicher Zahn nach Anspruch 7 oder 8,
**dadurch gekennzeichnet,**
daß die Dicke der unmittelbar auf dem Vollkern (1) folgenden Außenschicht (2) im Randbereich der basalen Seite (4), d.h. im Bereich des Zahnhalses, am kleinsten ist und sich in Richtung zur okklusalen bzw. incisalen Seite (7) hin vergrößert, so daß der Vollkern (1) und die Außenschicht (2) gemeinsam die Zahngrundstruktur bilden.

10. Künstlicher Zahn nach einem der Ansprüche 1 bis 9,
**dadurch gekennzeichnet,**
daß in der basalen Seite (4) des Vollkerns (1) in Richtung der Zahnachse ein Sackloch (8) ausgebildet ist, dessen Durchmesser ca. 2 bis 3 mm und dessen Tiefe ca. 4 bis 6 mm beträgt.

11. Künstlicher Zahn nach Anspruch 10,
**dadurch gekennzeichnet,**
daß das Sackloch (8) glattwandig ist.

12. Künstlicher Zahn nach einem der Ansprüche 1 bis 11,
**dadurch gekennzeichnet,**
daß der Vollkern (1) und die Außenschichten (2,3) unterschiedlich eingefärbt sind, wobei insbesondere der Vollkern (1) dunkel, die erste Außenschicht (2) durchscheinend heller und die zweite Außenschicht (3) farblos durchscheinend ist.

13. Künstlicher Zahn nach einem der Ansprüche 1 bis 12,
**dadurch gekennzeichnet,**
daß bei einem als Seitenzahn ausgebildeten Zahnkörper ein lingualer Trenngrat (10) im Übergang zwischen der lingualen Körperseite (11) und der okklusalen Körperfläche (12) und ein bukkaler Trenngrat (13) im Übergang zwischen der bukkalen Körperseite (14) und der Basis (15) des Zahnkörpers verläuft.

14. Künstlicher Zahn nach einem der Ansprüche 1 bis 12,
**dadurch gekennzeichnet,**
daß bei einem als Frontzahn ausgebildeten Zahnkörper jeweils ein Trenngrat (16) mittig an den beiden Seitenflächen (17,18) des Zahnkörpers von der Basis zur Zahnschneide verläuft.

15. Künstlicher Zahn nach Anspruch 14,
**dadurch gekennzeichnet,**
daß die Trenngrate (16) an den beiden Seitenflächen (17,18) des Zahnkörpers jeweils etwa diagonal, die Enden des lingualen (10) und bukkalen Trenngrates (13) verbindend, verlaufen.

16. Verfahren zur Herstellung eines Zahns nach Anspruch 1 oder 2,
**dadurch gekennzeichnet,**
daß der Vollkern (1) und die Außenschichten (2,3) im Mehrkomponenten-Verfahren vom Kern (1) aufbauend übereinander den Kern (1) umhüllend gespritzt werden.

17. Verfahren nach Anspruch 16,
**dadurch gekennzeichnet,**
daß das Einspritzen der jeweiligen Folgeschichten so schnell erfolgt, daß die an der Berührungsfläche zur Unterschicht entstehende Kontakttemperatur höher ist als die Erweichungstemperatur des verwendeten Kunststoffes.

18. Verfahren nach Anspruch 17,
**dadurch gekennzeichnet,**
daß bei der Öffnung des Spritzwerkzeuges das Kunststoffmaterial noch plastisch aber schon formstabil ist und vorzugsweise etwa Glastemperatur aufweist.

19. Verfahren nach einem der Ansprüche 16 bis 18,
**dadurch gekennzeichnet,**
daß mittels eines Spritzwerkzeuges gleichzeitig mehrere Zähne z.B. eine Zahngarnitur spritzgegossen werden.

## Claims

1. Artificial tooth of synthetic material produced by injection moulding, comprising a solid core (1) and at least one outer layer (2), for use as a tooth replacement for a natural tooth in the human body, characterized in that the first outer layer (2) directly envelops the inner solid core (1) on all sides from its base (4) and any further outer layers envelop the inner outer layers on all sides, the solid core (1), the first outer layer (2) and any further outer layers being produced from a thermoplastic injection-moulding compound.

2. Artificial tooth produced by injection moulding, comprising a solid core (1) and at least one outer layer (2), for use as a tooth replacement for a natural tooth in the human body, characterised in that the first outer layer (2) directly envelops the inner solid core (1) on all sides from its base (4) and any further outer layers envelop the inner outer layers on all sides, the solid core (1), the first outer layer (2) and any further outer layers being produced from a ceramic compound capable of being injection-moulded, comprising a ceramic powder with a binder of plastic.

3. Artificial tooth according to Claim 1, characterized in that a synthetic material of a transparent (amorphous) plastic is used as the production material.

4. Artificial tooth according to Claim 1, characterized in that an impact-modified polymethyl methacrylate (PMMA) is used as the synthetic material.

5. Artificial tooth according to Claims 1, 3 or 4, characterized in that a blend of plastics with the same refractive index is used as the synthetic material.

6. Artificial tooth according to Claim 1, characterized in that a blend of copolymers of methyl methacrylate (MMA) and styrene with an MMA content of over 60% is used as the synthetic material.

7. Artificial tooth according to one of Claims 1 to 5, characterized in that, if formed as an anterior tooth, the solid core (1) is enveloped by the outer layers (2, 3) on the palatinal side (5), the labial side (6) and the incisal side (7) and in their joining regions.

8. Artificial tooth according to one of Claims 1 to 6, characterized in that, if formed as a posterior tooth, the solid core (1) is enveloped by the outer layers (2, 3) on the palatinal side (5), the buccal side (6) and the occlusal side (7) and in their joining regions.

9. Artificial tooth according to Claim 7 or 8, characterized in that the thickness of the outer layer (2) following directly on the solid core (1) is at its smallest in the marginal region of the basal side (4), i.e. in the region of the tooth cervix, and increases in the direction of the occlusal or incisal side (7), so that the solid core (1) and the outer layer (2) together form the basic tooth structure.

10. Artificial tooth according to one of Claims 1 to 9, characterized in that in the basal side (4) of the solid core (1) there is formed in the direction of the tooth axis a blind hole (8), the diameter of which is about 2 to 3 mm and the depth of which is about 4 to 6 mm.

11. Artificial tooth according to Claim 10, characterized in that the blind hole (8) has smooth walls.

12. Artificial tooth according to one of Claims 1 to 11, characterized in that the solid core (1) and the outer layers (2, 3) are differently coloured, with in particular the solid core (1) being dark, the first outer layer (2) being translucently lighter and the second outer layer (3) being colourlessly translucent.

13. Artificial tooth according to one of Claims 1 to 12, characterized in that, if the tooth body is formed as a posterior tooth, a lingual separating flash (10) runs in the transition between the lingual body side (11) and the occlusal body surface (12) and a buccal separating flash (13) runs in the transition between the buccal body side (14) and the base (15) of the tooth body.

14. Artificial tooth according to one of Claims 1 to 12, characterized in that, if the tooth body is formed as an anterior tooth, a separating flash (16) runs centrally on each of the two side faces (17, 18) of the tooth body, from the base to the cutting edge of the tooth.

15. Artificial tooth according to Claim 14, characterized in that the separating flashes (16) on the two side faces (17, 18) of the tooth body each run approximately diagonally, so as to join the ends of the lingual (10) and buccal separating flash (13).

16. Process for producing a tooth according to Claim 1 or 2, characterized in that the solid core (1) and the outer layers (2, 3) are injection-moulded by the multicomponent process, building up one on top of the other from the core (1) and enveloping the core (1) .

17. Process according to Claim 16, characterized in that the injection of the respective following layers takes place so quickly that the contact temperature produced at the contact surface with respect to the underlying layer is higher than the softening temperature of the plastic used.

18. Process according to Claim 17, characterized in that, when the injection mould is opened, the plastic material is still plastic but already dimensionally stable and preferably is approximately at the glass transition temperature.

19. Process according to one of claims 16 to 18, characterized in that a plurality of teeth, for example a set of teeth, are injection-moulded simultaneously by means of one injection mould.

## Revendications

1. Dent artificielle moulée par injection dans une matière synthétique, comprenant un noyau plein (1) et au moins une couche externe (2), peut être utilisée en tant que remplacement d'une dent naturelle dans le corps humain,
**caractérisée** en ce que la première couche externe (2) entoure directement de tous côtés le noyau plein interne (1) à partir de sa base (4), et que d'éventuelles couches externes supplémentaires entourent de tous côtés les couches externes intérieures, le noyau plein (1), la première couche externe (2), et les éventuelles couches externes supplémentaires étant réalisés en une masse thermoplastique à mouler par injection.

2. Dent artificielle moulée par injection, comprenant un noyau plein (1) et au moins une couche externe (2), peut être utilisée en tant que remplacement d'une dent naturelle dans le corps humain,
**caractérisée** en ce que la première couche externe (2) entoure directement de tous côtés le noyau plein interne (1) à partir de sa base (4), et que d'éventuelles couches externes supplémentaires entourent de tous côtés les couches externes intérieures, le noyau plein (1), la première couche externe (2) et les éventuelles couches externes supplémentaires étant réalisés en une masse céramique composée d'une poudre et d'un liant en matière synthétique pouvant être moulée par injection.

3. Dent artificielle selon la revendication 1, **caractérisée** en ce qu'on utilise en tant que matériau de fabrication un matériau synthétique en une matière synthétique transparente (amorphe).

4. Dent artificielle selon la revendication 1, **caractérisée** en ce qu'on utilise en tant que matériau synthétique un polyméthacrylate de méthyle (PMMA) modifié à résistance élevée aux chocs.

5. Dent artificielle selon les revendications 1, 3 ou 4, **caractérisée** en ce qu'on utilise en tant que matériau synthétique un mélange de matières synthétiques ayant le même index de réfraction.

6. Dent artificielle selon la revendication 1, **caractérisée** en ce qu'on utilise en tant que matériau synthétique un mélange de copolymères de méthacrylate de méthyle (MMA) et de styrène, la proportion de MMA étant supérieure à 60%.

7. Dent artificielle selon l'une des revendications 1 à 6, **caractérisée** en ce que, lorsqu'elle est réalisée sous la forme d'une dent frontale, le noyau plein (1) est entouré par les couches externes (2, 3) côté palais, lèvres (6) et incision (7), ainsi que dans les régions de leur liaison.

8. Dent artificielle selon l'une des revendications 1 à 6, **caractérisée** en ce que, lorsqu'elle est réalisée sous la forme d'une dent latérale, le noyau plein (1) est entouré par les couches externes (2, 3) côté palais (5), bouche (6) et occlusion (7), ainsi que dans les régions de leur liaison.

9. Dent artificielle selon la revendication 7 ou 8, **caractérisée** en ce que l'épaisseur de la couche externe (2) faisant immédiatement suite au noyau plein (1) est la plus faible dans la région de bord côté base (4), à savoir dans la région du col de la dent, et augmente dans la direction du côté occlusion ou incision (7), le noyau plein (1) et la couche externe (2) formant ainsi ensemble la structure de base de la dent.

10. Dent artificielle selon l'une des revendications 1 à 9, **caractérisée** en ce que, côté base (4) du noyau plein (1), on a réalisé dans la direction de l'axe de la dent un trou borgne (8) dont le diamètre est d'environ 2 à 3 mm et dont la profondeur est d'environ 4 à 6 mm.

11. Dent artificielle selon la revendication 10, **caractérisée** en ce que le trou borgne (8) a des parois lisses.

12. Dent artificielle selon l'une des revendications 1 à 11, **caractérisée** en ce que le noyau plein (1) et les couches externes (2, 3) sont de teinte différente, le noyau plein (1) étant en particulier foncé, la première couche externe (2) étant plus claire et transparente, et la deuxième couche externe (3) étant transparente et incolore.

13. Dent artificielle selon l'une des revendications 1 à 12, **caractérisée** en ce que, lorsque le corps de dent a la forme d'une dent latérale, une arête linguale de séparation (10) s'étend dans la région de transition entre la face linguale (11) et la face d'occlusion (12) du corps, et qu'une arête buccale de séparation (13) s'étend dans la région de transition entre la face buccale (14) et la base (15) du corps de la dent.

14. Dent artificielle selon l'une des revendications 1 à 12, **caractérisée** en ce que lorsque le corps de dent a la forme d'une dent frontale, une arête de séparation (16) s'étend respectivement centralement sur les deux faces latérales (17, 18) du corps de dent, de la base jusqu'au tranchant de la dent.

15. Dent artificielle selon la revendication 14, **caractérisée** en ce que les arêtes de séparation (16) des deux faces latérales (17, 18) du corps de dent s'étendent respectivement sensiblement dans la direction diagonale en reliant les extrémités de l'arête de séparation linguale (10) et buccale (13).

16. Procédé de fabrication d'une dent selon la revendication 1 ou 2, **caractérisé** en ce que le noyau plein (1) et les couches externes (2, 3) sont réalisés par injection selon un procédé à composantes multiples en partant du noyau (1), par superposition et en entourant le noyau (1).

17. Procédé selon la revendication 16, **caractérisé** en ce que l'injection des couches successives respectives a lieu à une vitesse telle que la température de contact apparaissant à la surface en contact avec la couche inférieure soit supérieure à la température de ramollissement de la matière synthétique utilisée.

18. Procédé selon la revendication 17, **caractérisé** en ce que, à l'ouverture de l'outil de moulage par injection, le matériau synthétique est encore plastique, mais déjà de forme stable et présente de préférence sensiblement la température du verre.

19. Procédé selon l'une des revendications 16 à 18, **caractérisé** en ce que plusieurs dents, par exemple une garniture de dents, sont simultanément moulées par injection au moyen d'un outil d'injection.
